# EUROPEAN PATENT SPECIFICATION

(11) **EP 0 504 797 B1**
(45) Date of publication and mention of the grant of the patent: **28.02.1996**
(21) Application number: 92104582.9
(22) Date of filing: 17.03.1992
(51) Int. Cl.: G01N 21/03, G01N 21/82

(54) **Reaction vessel for liquid optical measurement**
Reaktionsgefäss zur optischen Messung von Flüssigkeiten
Enceinte de réaction pour la mesure optique de fluides

(30) Priority: 20.03.1991 JP 16845/91 U
(43) Date of publication of application: 23.09.1992
(73) Proprietor: OLYMPUS OPTICAL CO., LTD., Tokyo 151 (JP)
(72) Inventor: Kojima, Keijiro, Hachiouji-shi, Tokyo-to (JP)
(74) Representative: Zenz, Joachim Klaus, Dipl.-Ing.

(56) References cited:
- DE-A- 3 022 940
- DE-A- 3 838 361
- DE-C- 3 238 471
- US-A- 4 465 938

## Description

### REACTION VESSEL FOR LIQUID OPTICAL MEASUREMENT

This invention relates to a method of optically measuring analytes contained in a sample and a device for carrying out said method comprising a reaction vessel for liquid optical measurement.

As an example of conventional reaction vessels for liquid optical measurement of the type, a reaction vessel for particle agglutination measurement is set forth in DE-A-3 022 940 (corresponding to U.S. Patent No. 4,303,616). This reaction vessel is designed so that the inside of its bottom region is configured as an inclined surface having a plurality of regular offsets, which serves to form a stable base layer of particles precipitated on the inclined surface. J. M. Rachel et al. [Transfusion, Vol. 25 (1), pp. 24-26, 1985] describe the solid phase agglutination technique using the reaction vessel having the inclined bottom on which a blcod cell monolayer is immobilized, as an antigen, to perform an immunological reaction with an analyte in the sample. Thus, in the cases of analyses based on a blood typing method and other immunological agglutination reactions, irregular immune bodies with a relatively little cohesive force, not to speak of particles with a greater cohesive force, can visually form an agglutination pattern with high reactivity and simple protocols. Hence, according to this prior art, the measurement relying on the naked eye or image processing can also be performed with ease and accuracy. Further, since the vessel is transparent and designed so that agglutination and nonagglutination patterns can be photoelectrically detected by light reflected from or transmitted through its bottom region, it enables an immunological analysis to be accurately made and is suitable to the treatment of a numerous number of samples. What should be remarked here is that the form of the inclined bottom viewed from a vertical direction is circular in order to facilitate the Judgment by comparing the contrast between central and peripheral areas of the bottom portion of the reaction vessel. Furthermore, a microtiter plate for a particle agglutination method, which consists of a plurality of reaction vessels having a capacity for small amounts of sample and reagent, is very popular in use recently.

However, although the foregoing reaction vessel for liquid optical measurement (that is, the reaction vessel for particle agglutination measurement) of the prior art is highly excellent for the analysis based on the immunological agglutination reaction, it is impossible to perform the photometry based on a measuring technique such that an optical path length must be made constant to determine the photometric amount from the solution containing the coloring or luminous reagent which reacts according to the amount of analyte in the sample, for example, an enzyme immuno assay (EIA) method (which also is one of immunological analysis methods and has higher specificity and accuracy than in the agglutination method, as usual, with easy judgment). In an examination for blood transfusion, the agglutination method has been largely used in the past, but the EIA method may be superior to it, depending on test items, so that there is a user's strong demand that both methods should be used in combination with each other for the examination.

It is, therefore, an object of the present invention to provide a method and reaction vessel for liquid optical measurement which makes possible the analysis based on the agglutination method and at the same time the photometry with constant optical path length, for example, the EIA method.

To achieve this object the invention makes use of the features of the claims.

Although a reaction vessel comprising upper side walls, opposite surfaces of which are parallel to each other, transparent, and flat, and a bottom region having inclined surfaces is already known from German Patent DE 32 38 471 C1, this vessel cannot be used for agglutination testing and photometry at the same time, because the bottom region, which is shaped like a channel, does not allow to read or measure agglutination patterns. The channel in the bottom region of that vessel, designed for liquid optical measurement on blood samples, is only used for collecting particles separated from the liquid by centrifugation, and is formed in a manner to avoid a whirling up of sediment during the optical measurement. An additional optical measurement on the precipitate in the channel, for example an agglutination testing, is not provided for and not possible.

Compared to the disclosure of the above cited patent the method of this invention is new with respect to the possibility to measure an analyte based on a combination of two different optical measurements on the same sample. The inclined surface of the bottom region has a slope for forming an agglutination pattern on an immunological agglutination reaction. The new design of the device according to the invention with an upper region for photometric testing and a bottom region for agglutination testing makes possible optical measurement on the same sample in both a vertical and a horizontal direction for different purposes. Different reagents can be supplied to the sample to apply different measurement techniques.

In accordance with one aspect of the present invention, the reaction vessel for liquid optical measurement comprises four side walls which are transparent and flat, and a bottom region whose inside has an inclined surface, in which two side walls in each pair of opposite side wall surfaces, of the four side walls, are parallel to each other and spaced a predetermined distance apart, and in which the inclined surface of the bottom region includes a plurality of regular offsets. The bottom region assumes a conical or quadrangular pyramidal shape.

According to another aspect of the present invention, the reaction vessel for liquid optical measurement is used as a plural so that reaction vessels are arranged in a row on the same plate to constitute a strip plate type.

According to the foregoing construction, the use of the bottom region of the reaction vessel for liquid optical measurement makes also it possible to perform the analysis based on the agglutination method as in the prior art. In addition, by making use of a hollow prismatic shaped region composed of the four side walls, the photometry based on, for instance, the EIA method, is also possible. In other words, the photometry is carried out from a direction perpendicular to the two side walls parallel to each other and having the predetermined distance, thereby allowing the optical path length to be constant. Consequently, an accurate and easy measurement can be made.

The features and advantages of the present invention will become apparent from the following detailed description of the preferred embodiments when taken in conjunction with the accompanying drawings.
Fig. 1 is a perspective view showing a first embodiment of the reaction vessel for liquid optical measurement according to the present invention;
Fig. 2 is a longitudinal sectional view showing the first embodiment;
Fig. 3 is a cross-sectional view showing the bottom region of the reaction vessel of the first embodiment;
Fig. 4 is a perspective view showing a second embodiment;
Fig. 5 is a longitudinal sectional view showing the second embodiment;
Fig. 6 is a cross-sectional view showing the bottom region of the reaction vessel of the second embodiment; and
Fig. 7 is a perspective view showing a third embodiment.

In accordance with the embodiments shown in the drawings, the present invention will be explained in detail below.

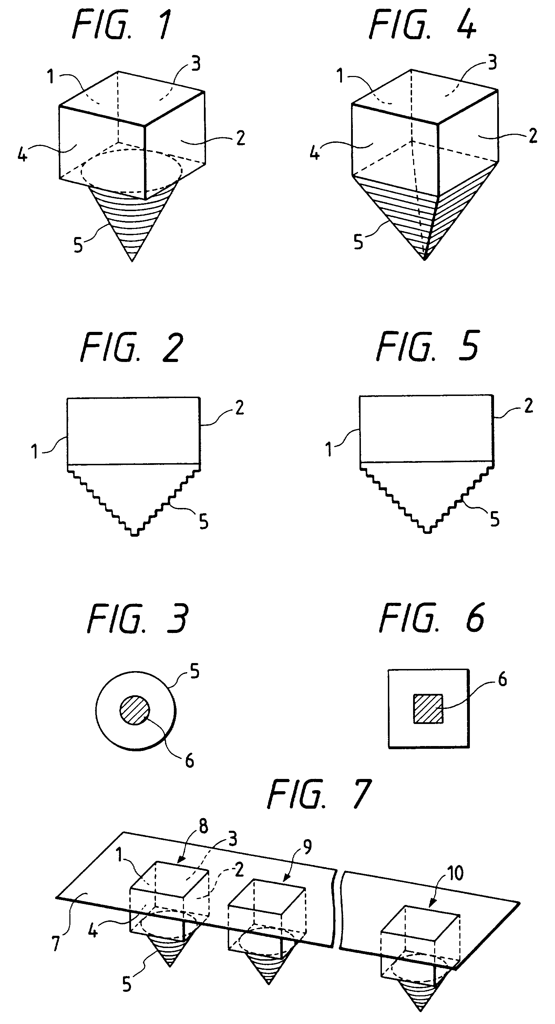

Figs. 1 to 3 show the first embodiment of the reaction vessel for liquid optical measurement according to the present invention. This embodiment comprises four side walls 1, 2, 3 and 4 (constituting a hollow prism) which are transparent and flat, and a single hollow conical bottom region 5 whose inside has an inclined surface, in which two side walls 1 and 2 or 3 and 4 with opposite faces, of the four side walls, are parallel to each other in spaced relation at a predetermined distance and the inclined surface of the bottom region 5 has a plurality of regular offsets.

The first embodiment is constructed as mentioned above, and in the cases of analyses based on a blood typing method and other immunological agglutination reactions, the bottom region 5 is employed. Since the inclined surface of the inside of the bottom region 5 is provided with a plurality of regular offsets, a stable base layer of particles precipitated on the inclined surface is formed in virtue of the offsets so that a clear agglutination pattern can be formed in particles such as irregular immune bodies with a relatively little cohesive force, not to speak of those with a greater cohesive force. Thus, the measurement made through the naked eye or image processing can be completed with ease and accuracy. Moreover, since the vessel possesses light-transmitting properties, the agglutination pattern can be photoelectrically detected by light reflected from or transmitted through the bottom region to accurately make an immunological analysis. Numeral reference 6 in Fig. 3 represents a nonagglutination pattern.

In the case of the photometry such that an optical path length must be made constant, for example, the EIA method, the hollow prismatic-shaped region of the vessel is to be used. That is, the inner surface of one of the four side walls 1, 2, 3 and 4 is first coated with antigens or immune bodies to pour a sample to be measured thereon. Next, after washing several times, a coloring liquid is poured thereon when the reaction has ceased, and the photometry is performed from a direction perpendicular to the two opposite side walls 1 and 2 or 3 and 4. In this way, the optical path length can be made constant, and accurate and easy measurement becomes possible.

Figs. 4 to 6 show the second embodiment of the reaction vessel for liquid optical measurement according to the present invention. In this embodiment, the bottom region 5, unlike that of the first embodiment, assumes a quadrangular pyramidal shape. Although the systems in the agglutination reaction and photometry of the second embodiment are identical with those of the first embodiment, the nonagglutination pattern is formed into a square.

An automatic blood transfusion examining apparatus according to the agglutination method or the EIA method makes use of the reaction vessel for liquid optical measurement generally termed a strip plate to be able to accommodate a multi-test item and a multi-object to be detected. Also, in the case of the examining apparatus to which both the agglutination and EIA methods are applied for the measurement, it is very effective that the strip plate constructed as the reaction vessel can be used in common for both the methods.

Fig. 7 shows the third embodiment constructed for the foregoing, which is such that reaction vessels for liquid optical measurement 8, 9 and 10, each of which is the same as that of the first embodiment, are arranged in a row on a plate 7 to constitute the strip plate. Thus, according to the third embodiment, the community of the strip plate is realized in relation to the measurements based on both the methods. Also, the reaction vessel for liquid optical measurement identical with the second embodiment may be used as a plural so as to be arranged in a row on the plate 7.

The reaction vessel according to the present invention can be applied to any analysis method for making the optical measurement by using its side walls, preferably with a coloring reaction as in the EIA method and a luminescence reaction as in CLIA (chemiluminescence immuno assay) and FIA (fluorescence immuno assay) methods. For an object for photometry, either a labeled substance bonded on the side walls or a substrate solution reacted with the labeled substance is employed. Also, the kind of reagent and the reaction condition applied to the reaction systems (including the agglutination method) mentioned above may be derived from the prior art. In the case where the agglutination method is not followed, not only the side walls but the bottom region can be used to make an analysis based on the EIA method, for instance.

If the bottom region of the reaction vessel according to the present invention is hemispherical or conical and the distances between the side walls are smaller than the diameter of the bottom region, the bottom region will be hard of use, which is unfavorable. When the surface of the bottom region is inclined so that agglutination and nonagglutination can be formed, the function of the reaction vessel is fulfiled.

Where the reaction vessel of the present invention is used as a plural, reaction vessels may be two-dimensionally arranged unless the optical axis normal to the side wall is blocked.

Further, for example, in order to make a simultaneous measurement as in a fourth embodiment which will be described below, the heights of the side walls and the depth of the bottom region of the reaction vessel may be designed to have such a capacity as to be capable of containing more reaction liquid (the sample and the reagent) than in ordinary use.

Now, reference is made to the fourth embodiment in which the reaction vessel is employed for the applications of both the agglutination and EIA methods.

### Example 1

In order to analyze the same object to be measured (analyte) through both the methods, the surfaces of the side walls and the bottom region of the reaction vessel are coated with an antigen or immune body specifically bonded with the analyte. Next, a serum sample is made to contact with the bottom and side wall surfaces and the analyte is bonded thereon. Here, preferably, the inside of the reaction vessel is washed. Subsequently, the reagent in which the antigen or immune body specifically bonded with the bonded analyte is labeled with a predetermined enzyme, for example, peroxidase, is made to contact with the bottom and side wall surfaces. In order to eliminate the labeled reagent which does not react, the inside of the reaction vessel is washed. Finally, by adding the substrate solution (reagent on the EIA method) such as to react with the enzyme for coloring or luminescence and/or particles (reagent on the agglutination method) bonded with the immune body against the enzyme, the optical measurement is performed through the bottom and side wall surfaces of the reaction vessel after the reaction for a preset time.

In this embodiment, since the same enzyme is bonded through the analyte with respect to the side wall and bottom surfaces of the reaction vessel, the conformation is simple. If, after the reaction of the labeled reagent, the reagent on the agglutination method is poured to such an extent as to cover the bottom surface of the reaction vessel for formation of an agglutination pattern, following which, preferably after the bottom surface is washed, the reagent on the EIA method is poured to such an extent as to cover the side wall surfaces of the reaction vessel, labor saving can be attained because the processes of pouring the sample and the labeled reagent are completed in one continuous operation. In general, by the agglutination method which has higher reactivity and simplicity than the EIA method, the sample is extracted in which the existence of the analyte is suspected, while by the EIA method which has a higher degree of accuracy than the agglutination method, the reactivity of the extracted sample only can be confirmed, so that a large number of samples can be treated by an automatic analysis.

### Example 2

In order to analyze different analytes in the same reaction vessel, the bottom surface of the reaction vessel is first coated with an immune body or antigen A specifically bonded with a first analyte, and the side wall surfaces are then coated with an immune body or antigen B specifically bonded with a second analyte. Here, the antigens A and B do not undergo reactions and the bottom surface is already uniformly coated with the antigen A, so that the antigen B is sufficiently poured, thereby causing the side wall surfaces to be coated.

The sample containing the first and second analyte is sufficiently poured into the reaction vessel so that the first analyte is bonded on the bottom surface and the second analyte on the side wall surfaces. Next, preferably after the inside of the reaction vessel is washed, the labeled reagent described in Example 1 is sufficiently poured and bonded with the second analyte on the side wall surfaces. Here, the labeled immune body is selected which does not react with the first analyte and the antigens A and B. Subsequently, after the inside of the reaction vessel is washed, the substrate solution and the particles stated in Example 1 are added and after a predetermined reaction time, the optical measurement is carried out through the bottom and side wall surface.

For two kinds of analytes favorable for Example 2, if, for example, the first analyte is taken as a blood type antigen (or immune body) and the second analyte as a contagious virus antigen (or immune body), a multi-analysis can be performed simultaneously.

According to Examples 1 and 2, the first and second analytes, different from each other, contained in the same sample can be measured at once by vertical and horizontal photometric instruments. In this case, if the interference of light causes problems, it is only necessary to narrow beams of light to proper amounts and radiate the light beams so as not to intersect with each other. Also, even if vertical and horizontal radiations are alternately repeated, the analytes can be detected at once without fear for the interference of light.

According to the fourth embodiment, since any analyte contained in a single sample liquid poured into the same reaction vessel can be analyzed through both the agglutination and EIA methods, the repeatability of the analysis is extremely high, and for the same analyte, a confirmatory examination can be effectively performed, while for the analytes of different kinds, a simultaneous examination can be carried out.

## Claims

1. A method of measuring analytes contained in a sample based on a combination of two separate optical measurements by introducing a sample and different liquid reagents into a reaction vessel specified with opposite side walls which are parallel to each other, transparent, and flat, and a bottom region forming an inclined surface with a slope for forming an agglutination pattern on an immunological agglutination reaction, comprising the steps of:
supplying a sample to said reaction vessel;
supplying a labeled reagent labeled with a predetermined label substance and containing an antigen or an immune body which is to be bonded specifically with an analyte contained in the sample to said reaction vessel;
supplying a precipitable particulate reagent for agglutination reaction to said reaction vessel, wherein an immune body which is to bond specifically with said label substance is fixed on individual particles of said particulate reagent;
supplying a substrate reagent which causes a coloring or luminescence reaction with said label substance to said reaction vessel;
performing optical measurement on the sample contained in the bottom region of said reaction vessel in a vertical direction in order to measure a result of reaction with said particulate reagent; and
performing optical measurement on the sample between the side wall region of said reaction vessel in a horizontal direction in order to measure a result of reaction with said substrate reagent.

2. A method according to claim 1, characterized in that both the particulate reagent and the substrate reagent are supplied to said reaction vessel in order to produce the reaction with the particulate reagent and the reaction with the substrate reagent at substantially the same time.

3. A method according to claim 1 or 2, characterized in that the result of reaction with the substrate reagent is measured after the result of reaction with the particulate reagent is measured.

4. A method according to claim 3, characterized in that the inner surface of said reaction vessel is washed after the result of reaction with the particulate reagent is measured.

5. A method according to claim 1, characterized in that the side wall region and the bottom region of said reaction vessel are coated with an antigen or an immune body, which is to be bonded specifically with an analyte.

6. A method according to claim 5, characterized in that the inner surface of said reaction vessel is washed before the particulate reagent and/or the substrate reagent is supplied to said reaction vessel.

7. A method according to claim 5, characterized in that each of the side wall region and the bottom region of said reaction vessel is coated with an antigen or an immune body which is to be bonded specifically with each of two different analytes.

8. A device for carrying out the method of any of claims 1 to 4, comprising:
a reaction vessel for liquid optical measurement, comprising:
a capacity of said reaction vessel sufficient to contain a sample and different reagents of necessary amounts for an optical analysis;
a bottom region with an inclined surface provided with regular offsets in order to keep only particles of the particulate reagent, which have undergone agglutination reaction on said inclined surface stably; and
means for performing optical measurement on the sample contained in the bottom region of said reaction vessel in a vertical direction;
**characterized in that** said reaction vessel has a side wall region, a cross-section of which is shaped polygonal, including opposite surfaces of said side wall region for a second optical measurement, which are parallel to each other, transparent, and flat;
and further comprising means for performing optical measurement on the sample between the side wall region of said reaction vessel in a horizontal direction.

9. A device for carrying out the method of any of claims 1, 5, 6 or 7, comprising:
a reaction vessel for liquid optical measurement, comprising:
a capacity of said reaction vessel sufficient to contain a sample and different reagents of necessary amounts for an optical analysis;
a bottom region with an inclined surface provided with an area to be coated with an antigen or an immune body, which is to be bonded specifically with an analyte, in order to keep only particles of the particulate reagent, which have undergone agglutination reaction on said inclined surface stably; and
means for performing optical measurement on the sample contained in the bottom region of said reaction vessel in a vertical direction;
**characterized in that** said reaction vessel has a side wall region, a cross-section of which is shaped polygonal, including opposite surfaces of said side wall region for a second optical measurement, which are parallel to each other, transparent, and flat;
and further comprising means for performing optical measurement on the sample between the side wall region of said reaction vessel in a horizontal direction.

10. A device according to claim 8 or 9, characterized in that the inclined surface of the bottom region of said reaction vessel has a hollow conical shape and inclination in all directions therof is uniform.

11. A device according to claim 8 or 9, characterized in that the inclined surface of the bottom region of said reaction vessel has a hollow pyramidal shape and inclination of a plurality of inclined planes thereof is uniform.

12. A device according to claim 11, characterized in that said reaction vessel is configured so that the side wall region is composed of four sides and the bottom region has a quadrangular cross-section.

## Patentansprüche

1. Verfahren zum Messen von in einer Probe enthaltenen zu analysierenden Stoffen auf der Basis einer Kombination von zwei getrennten optischen Messungen, wobei eine Probe und unterschiedliche flüssige Reagenzien einem Reaktionsgefäß zugeführt werden, das versehen ist mit gegenüberliegenden Seitenwänden, die zueinander parallel, durchsichtig und eben sind, und mit einem unteren Bereich, der zur Bildung eines Agglutinationsmusters bei einer immunologischen Agglutinationsreaktion eine geneigte Fläche mit einer Neigung bildet, wobei das Verfahren die Schritte aufweist,
daß dem Reaktionsgefäß eine Probe zugeführt wird;
daß dem Reaktionsgefäß ein markiertes Reagenz zugeführt wird, das mit einer vorgegebenen Markierungssubstanz markiert ist und ein Antigen oder einen Immunkörper enthält, das bzw. der speziell mit einem in der Probe enthaltenen zu analysierenden Stoff gebunden werden soll;
daß dem Reaktionsgefäß ein fällbares Partikelreagenz für eine Agglutinationsreaktion zugeführt wird, wobei ein Immunkörper, der speziell mit dieser Markierungssubstanz gebunden werden soll, auf einzelnen Partikeln des Partikelreagenzes fixiert wird;
daß dem Reaktionsgefäß ein Substratreagenz zugeführt wird, das mit der Markierungssubstanz eine Färbungs- oder Lumineszenzreaktion verursacht; und
daß an der in dem unteren Bereich des Reaktionsgefäßes enthaltenen Probe eine optische Messung in vertikaler Richtung durchgeführt wird, um ein Ergebnis der Reaktion mit dem Partikelreagenz zu messen; und
daß an der Probe zwischen dem Seitenwandbereich des Reaktionsgefäßes eine optische Messung in horizontaler Richtung durchgeführt wird, um ein Ergebnis der Reaktion mit dem Substratreagenz zu messen.

2. Verfahren nach Anspruch 1, dadurch gekennzeichnet, daß das Partikelreagenz und das Substratreagenz beide dem Reaktionsgefäß zugeführt werden, um die Reaktion mit dem Partikelreagenz und die Reaktion mit dem Substratreagenz im wesentlichen gleichzeitig zu verursachen.

3. Verfahren nach Anspruch 1 oder 2, dadurch gekennzeichnet, daß das Ergebnis der Reaktion mit dem Substratreagenz gemessen wird, nachdem das Ergebnis der Reaktion mit dem Partikelreagenz gemessen wurde.

4. Verfahren nach Anspruch 3, dadurch gekennzeichnet, daß die Innenfläche des Reaktionsgefäßes gereinigt wird, nachdem das Ergebnis der Reaktion mit dem Partikelreagenz gemessen wurde.

5. Verfahren nach Anspruch 1, dadurch gekennzeichnet, daß der Seitenwandbereich und der untere Bereich des Reaktionsgefäßes mit einem Antigen oder einem Immunkörper überzogen werden, die speziell mit einem zu analysierenden Stoff gebunden werden sollen.

6. Verfahren nach Anspruch 5, dadurch gekennzeichnet, daß die Innenfläche des Reaktionsgefäßes gereinigt wird, bevor das Partikelreagenz und/oder das Substratreagenz dem Reaktionsgefäß zugeführt werden.

7. Verfahren nach Anspruch 5, dadurch gekennzeichnet, daß sowohl der Seitenwandbereich als auch der untere Bereich des Reaktionsgefäßes mit einem Antigen oder einem Immunkörper überzogen werden, die jeweils mit einem von zwei verschiedenen zu analysierenden Stoffen gebunden werden sollen.

8. Vorrichtung zur Durchführung des Verfahrens nach einem der Ansprüche 1 bis 4, die ein Reaktionsgefäß für optische Messungen an Flüssigkeiten enthält, mit:
einer Aufnahmekapazität des Reaktionsgefäßes, die ausreicht, um eine Probe und verschiedene Reagenzien in den für eine optische Analyse benötigten Mengen zu fassen; einem unteren Bereich mit einer geneigten Fläche, der mit regelmäßigen Absätzen versehen ist, um nur Partikel des Partikelreagenzes zu halten, die sich einer Agglutinationsreaktion auf der geneigten Fläche stabil unterzogen haben; und
mit Mitteln, um an der in dem unteren Bereich des Reaktionsgefäßes enthaltenen Probe eine optische Messung in vertikaler Richtung durchzuführen;
**dadurch gekennzeichnet,**
daß das Reaktionsgefäß einen Seitenwandbereich aufweist, dessen Querschnitt polygonförmig ist und der für eine zweite optische Messung gegenüberliegende Flächen des Seitenwandbereiches enthält, die zueinander parallel, durchsichtig und eben sind;
und daß außerdem Mittel vorgesehen sind, um an der Probe zwischen dem Seitenwandbereich des Reaktionsgefäßes eine optische Messung in horizontaler Richtung durchzuführen.

9. Vorrichtung zur Durchführung des Verfahrens nach einem der Ansprüche 1, 5, 6 oder 7, die ein Reaktionsgefäß für optische Flüssigkeiten enthält, mit:
einer Aufnahmekapazität des Reaktionsgefäßes, die ausreicht, um eine Probe und verschiedene Reagenzien in den für eine optische Analyse benötigten Mengen zu fassen; einem unteren Bereich mit einer geneigten Fläche, der mit einer Fläche versehen ist, die mit einem Antigen oder einem Immunkörper überzogen werden soll, die mit einem zu analysierenden Stoff speziell gebunden werden sollen, um nur die Partikel des Partikelreagenzes zu halten, die sich auf der geneigten Fläche der Agglutinationsreaktion stabil unterzogen haben;
und mit Mitteln zur Durchführung einer optischer Messung an der in dem unteren Bereich des Reaktionsgefäßes enthaltenen Probe in vertikaler Richtung;
**dadurch gekennzeichnet,**
daß das Reaktionsgefäß einen Seitenwandbereich aufweist, dessen Querschnitt polygonförmig ist und der für eine zweite optische Messung gegenüberliegende Flächen des Seitenwandbereiches aufweist, die zueinander parallel, durchsichtig und eben sind;
und daß außerdem Mittel vorgesehen sind, um an der Probe zwischen dem Seitenwandbereich des Reaktionsgefäßes optische Messungen in horizontaler Richtung durchzuführen.

10. Vorrichtung nach Anspruch 8 oder 9, dadurch gekennzeichnet, daß die geneigte Fläche des unteren Bereichs des Reaktionsgefäßes eine hohle konische Form aufweist und daß die Neigung in alle Richtungen einheitlich ist.

11. Vorrichtung nach Anspruch 8 oder 9, dadurch gekennzeichnet, daß die geneigte Fläche des unteren Bereichs des Reaktionsgefäßes eine hohle Pyramidenform aufweist und daß die Neigung einer Mehrzahl ihrer geneigten Ebenen einheitlich ist.

12. Vorrichtung nach Anspruch 11, dadurch gekennzeichnet, daß das Reaktionsgefäß derart konfiguriert ist, daß der Seitenwandbereich aus vier Seiten aufgebaut ist, und daß der untere Bereich einen quadratischen Querschnitt aufweist.

## Revendications

1. Procédé de mesure d'analytes contenus dans un échantillon, sur la base d'une combinaison de deux mesures optiques séparées, par introduction d'un échantillon et de différents réactifs liquides dans un récipient de réaction pourvu de parois latérales opposées qui sont parallèles entre elles, transparentes, planes, et d'une zone inférieure formant une surface inclinée avec une pente pour former un motif d'agglutination lors d'une réaction immunologique d'agglutination, comprenant les étapes suivantes :
on amène un échantillon dans le récipient de réaction;
on amène un réactif marqué, marqué avec une substance de marquage prédéterminée et contenant un antigène ou un corps immun qui doit être lié spécifiquement avec un analyte contenu dans l'échantillon, audit récipient de réaction;
on amène un réactif particulaire pouvant se précipiter en vue d'une réaction d'agglutination dans ledit récipient de réaction, dans lequel un corps immun qui doit être lié spécifiquement à ladite substance de marquage est fixé sur des particules individuelles du réactif particulaire;
on amène un réactif de substrat, qui provoque une réaction de coloration ou de luminescence avec ladite substance de marquage, dans ledit récipient de réaction;
on effectue une mesure optique de l'échantillon contenu dans la zone inférieure dudit récipient de réaction, dans une direction verticale, en vue de mesurer le résultat de réaction avec ledit réactif particulaire; et
on effectue une mesure optique de l'échantillon dans la zone de paroi latérale dudit récipient de réaction, dans une direction horizontale, en vue de mesurer le résultat de réaction avec ledit réactif de substrat.

2. Procédé selon la revendication 1, caractérisé en ce que le réactif particulaire et le réactif de substrat sont tous deux fournis audit récipient de réaction en vue de mettre en oeuvre la réaction avec le réactif particulaire et la réaction avec le réactif de substrat sensiblement en même temps.

3. Procédé selon la revendication 1 ou 2, caractérisé en ce que le résultat de réaction avec le réactif de substrat est mesuré après que le résultat de réaction avec le réactif particulaire ait été mesuré.

4. Procédé selon la revendication 3, caractérisé en ce que la surface intérieure dudit récipient de réaction est rincée après que le résultat de réaction avec le réactif particulaire ait été mesuré.

5. Procédé selon la revendication 1, caractérisé en ce que la zone de paroi latérale et la zone inférieure dudit récipient de réaction sont recouvertes d'un antigène ou d'un corps immun, qui doit être lié spécifiquement à un analyte.

6. Procédé selon la revendication 5, caractérisé en ce que la surface intérieure dudit récipient de réaction est rincée avant que le réactif particulaire et/ou le réactif de substrat soient fournis audit récipient de réaction.

7. Procédé selon la revendication 5, caractérisé en ce que chaque zone parmi la zone de paroi latérale et la zone inférieure dudit récipient de réaction est recouverte d'un antigène ou d'un corps immun qui doit être lié spécifiquement à chacun des deux analytes différents.

8. Dispositif pour la mise en oeuvre du procédé selon l'une quelconque des revendications 1 à 4, comprenant :
un récipient de réaction pour une mesure optique de liquide, comprenant:
une capacité dudit récipient de réaction suffisante pour contenir un échantillon et différents réactifs en des quantités nécessaires pour obtenir une analyse optique;
une zone inférieure pourvue d'une surface inclinée, ayant des décalages réguliers en vue de maintenir seulement des particules du réactif particulaire, qui ont subi une réaction d'agglutination sur ladite surface inclinée, de manière stable; et
un moyen pour réaliser une mesure optique sur l'échantillon contenu dans la zone inférieure dudit récipient de réaction, dans une direction verticale;
caractérisé en ce que ledit récipient de réaction présente une zone de paroi latérale, dont la section transversale est de forme polygonale, comprenant des surfaces opposées de ladite zone de paroi latérale pour effectuer une deuxième mesure optique, qui sont parallèles entre elles, transparentes et planes;
et comprenant en outre un moyen pour réaliser une mesure optique de l'échantillon situé dans la zone de paroi latérale dudit récipient de réaction, dans une direction horizontale.

9. Dispositif pour la mise en oeuvre du procédé selon l'une quelconque des revendications 1, 5, 6 ou 7, comprenant:
un récipient de réaction pour effectuer une mesure optique de liquide, comprenant :
une capacité dudit récipient de réaction suffisante pour contenir un échantillon et différents réactifs en des quantités nécessaires pour effectuer une analyse optique; une zone inférieure pourvue d'une surface inclinée, ayant une zone devant être recouverte d'un antigène ou d'un corps immun, qui doit être lié spécifiquement à un analyte, en vue de maintenir seulement des particules du réactif particulaire qui ont subi une réaction d'agglutination sur ladite surface inclinée, de manière stable ; et
un moyen pour effectuer une mesure optique de l'échantillon contenu dans la zone inférieure dudit récipient de réaction, dans une direction verticale;
caractérisé en ce que ledit récipient de réaction présente une zone de paroi latérale dont la section transversale est de forme polygonale, comprenant des surfaces opposées de ladite zone de paroi latérale pour effectuer une deuxième mesure optique, qui sont parallèles entre elles, transparentes et planes;
et comprenant en outre un moyen pour effectuer une mesure optique de l'échantillon situé dans la zone de paroi latérale dudit récipient de réaction, dans une direction horizontale.

10. Dispositif selon la revendication 8 ou 9, caractérisé en ce que la surface inclinée de la zone inférieure dudit récipient de réaction présente une forme conique creuse et l'inclinaison dans toutes ses directions est uniforme.

11. Dispositif selon la revendications 8 ou 9, caractérisé en ce que la surface inclinée de la zone inférieure dudit récipient de réaction présente une forme pyramidale creuse et l'inclinaison d'une pluralité de ces plans inclinés est uniforme.

12. Dispositif selon la revendication 11, caractérisé en ce que ledit récipient de réaction est configuré de manière que la zone de paroi latérale soit constituée de quatre côtés et que la zone inférieure présente une section transversale de forme quadrangulaire.
